# EUROPÄISCHE PATENTSCHRIFT

(11) **EP 1 269 130 B1**
(45) Veröffentlichungstag und Bekanntmachung des Hinweises auf die Patenterteilung: **22.10.2008**
(21) Anmeldenummer: 01913717.3
(22) Anmeldetag: 24.02.2001
(51) Int. Cl.: G01K 7/18

(54) **SENSORELEMENT, INSBESONDERE TEMPERATURFÜHLER**
SENSOR ELEMENT, IN PARTICULAR A TEMPERATURE SENSOR
ELEMENT DE DETECTION, NOTAMMENT SONDE DE TEMPERATURE

(30) Priorität: 01.04.2000 DE 10016415
(43) Veröffentlichungstag der Anmeldung: 02.01.2003
(73) Patentinhaber: ROBERT BOSCH GMBH, 70442 Stuttgart (DE)
(72) Erfinder: GEIER, Heinz, 71229 Leonberg (DE); LINDEMANN, Gert, 72805 Lichtenstein (DE); LINDNER, Friederike, 70839 Gerlingen (DE); BRINZ, Thomas, 73266 Bissingen unter der Teck (DE); EISELE, Ulrich, 70199 Stuttgart (DE)
(86) Internationale Anmeldenummer: PCT/DE2001/000721
(87) Internationale Veröffentlichungsnummer: WO 2001/075408

(56) Entgegenhaltungen:
- DE-A- 19 651 454
- DE-C- 19 636 493

## Beschreibung

Die Erfindung betrifft ein Sensorelement, insbesondere einen Temperaturfühler, nach der Gattung des Hauptanspruches.

### Stand der Technik

Aus der Anmeldung DE 196 51 454 A1 ist ein elektrischer Widerstand bekannt, der durch Einschmelzen eines metallbeschichteten Glases hergestellt wird. Dadurch entsteht eine in einer Glasmatrix eingebettete netzwerkartige Metallphase. Diese Metallphase wird beispielsweise von dünnen Platin-Metallschichten gebildet.

Aus DE 196 36 493 C1 ist bekannt, ein Glaspulver mit einem Edelmetallsalz zu bekeimen, das chemisch an die Glaspulveroberfläche gebunden ist. Weiter ist daraus bekannt, ein derartig bekeimtes Glaspulver mit einer Oberflächenmetallisierung zu versehen, die eine typische Dicke im Nanometerbereich aufweist. Aus DE 196 36 493 C1 ist weiter auch das Verfahren zum Bekeimen und Beschichten des Metallpulvers mit einer derartigen Oberflächenmetallisierung bekannt.

Schließlich werden derzeit Temperaturfühler hergestellt, bei denen Platin in Form einer Dünnschicht auf ein keramisches Substrat aufgedampft wird, wobei die aufgedampfte Platinschicht dann mit einem Laser auf einen gewünschten Widerstandswert getrimmt und zum Einsatz in einem Abgas mittels einer darüberliegenden Glasschicht geschützt wird. Die eigentliche Messung der Temperatur mit einem solchen Temperaturfühler basiert auf der Temperaturabhängigkeit des spezifischen elektrischen Widerstandes von Platin.

### Vorteile der Erfindung

Das erfindungsgemäße Sensorelement hat gegenüber dem Stand der Technik den Vorteil, dass damit ein mechanisch robuster, kostengünstiger und in beispielsweise Abgasen bei Temperaturen von bis zu 1100 °C einsetzbarer Temperaturfühler herstellbar ist. Dieser Temperaturfühler zeigt dabei den gleichen Temperaturgang wie bekannte Platin- Widerstandstemperaturfühler, ohne dass zu dessen Herstellung ein aufwendiger Dünnschichtprozess mit anschließender Überglasung erforderlich ist.

Vorteilhafte Weiterbildungen der Erfindung ergeben sich aus den in den Unteransprüchen genannten Maßnahmen.

So ist es besonders vorteilhaft zur Realisierung der gewünschten Temperaturabhängigkeit des hergestellten Temperaturfühlers eine Oberflächenmetallisierung in Form einer Platin-Metallisierung mit einer mittleren Dicke von 0,5 nm bis 10 nm, insbesondere 1 nm bis 3 nm, vorzunehmen.

Weiter ist vorteilhaft, dass die glaskeramische Einschmelzung in dem sensitiven Bereich des erfindungsgemäßen Sensorelementes über einen gewöhnlichen Dichschichtprozess beispielsweise auf ein handelsübliches Aluminiumoxid-Fertigsubstrat aufgebracht und in einem Schritt bei Temperaturen von ca. 900 °C eingebrannt werden kann. Dabei ist insbesondere vorteilhaft, dass durch den angepassten Wärmeausdehnungskoeffizienten der glaskeramischen Einschmelzung an das Substrat, insbesondere Al₂O₃, bei Betrieb zumindest nahezu keine thermomechanischen Spannungen auftreten.

Die Ausführung des sensitiven Bereiches in Form einer glaskeramischen Einschmelzung mit einer insbesondere netzwerkartig ausgebildeten, darin eingebetteten Metallphase hat weiter den Vorteil, dass auf sonst übliche Sintertemperaturen von über 1400 °C verzichtet werden kann. Derartig hohe Sintertemperaturen sind im Stand der Technik dann erforderlich, wenn anstelle einer glaskeramischen Einschmelzung eine Keramik wie Al₂O₃ oder Zirkoniumdioxid verwendet wird, die beispielsweise mit einem Platin-Pulver vermischt ist. Derartige Keramikpulver zur Ausbildung eines gewünschten Widerstandes mit Platin-Charakteristik haben überdies gegenüber der erfindungsgemäß eingesetzten glaskeramischen Einschmelzung den Nachteil, dass die bei über 1400 °C erzeugten PlatinSchichten vielfach koagulieren und zuvor entstandene Leitungspfade zur Gewährleistung einer ausreichenden elektrischen Leitfähigkeit wieder aufbrechen, so dass kein Werkstoff mit einer metallischen Widerstandscharakteristik erhalten werden kann.

Der spezifische elektrische Widerstand des erzeugten Sensorelementes lässt sich schließlich vorteilhaft über die Dicke der erzeugten Oberflächenmetallisierung einer Komponente des Ausgangsmaterials für die glaskeramische Einschmelzung einstellen.

Weiter ist vorteilhaft, dass das Ausgangsmaterial zur Herstellung der glaskeramischen Einschmelzung bei 850°C bis 950°C eingeschmolzen werden kann, wobei nach einer Auskristallisation refraktäre Phasen entstehen, die dann bis über 1000°C temperaturstabil sind und in ihrem Wärmeausdehnungskoeffizienten an Al₂O₃ angepasst sind. Die derart hergestellte glaskeramische Einschmelzung ist weiter, sofern man von einer Oberflächenmetallisierung der Komponente des Ausgangsmaterials absieht, auch bei hohen Temperaturen elektrisch isolierend. So weist sie beispielsweise eine elektrische Durchschlagsfestigkeit von mehr als 10 kV/mm bei 800°C auf.

Zur elektrischen Kontaktierung und zur Herstellung von Zuleitungen zu der glaskeramischen Einschmelzung kann weiter vorteilhaft ebenfalls eine glaskeramische Einschmelzung mit jedoch modifizierter Zusammensetzung und damit modifizierter Widerstandscharakteristik eingesetzt werden. Alternativ eignet sich aber auch eine handelsübliche, niederohmige Elektrodenpaste zur Ausbildung der Zuleitungen und Kontaktierungen.

Um den temperatursensitiven Bereich des Sensorelementes von dem darunter befindlichen Substrat thermisch zu entkoppeln, ist es weiter vorteilhaft, zwischen der glaskeramischen Einschmelzung und dem Substrat eine Zwischenschicht vorzusehen. Dazu wird bevorzugt eine Zwischenschicht aus einer Glaskeramik eingesetzt, die die gleiche Zusammensetzung wie das Ausgangsmaterial für die glaskeramische Einschmelzung in dem sensitiven Bereich des Sensorelementes aufweist, wobei jedoch auf eine Oberflächenmetallisierung einer Komponente dieses Ausgangsmaterials verzichtet wurde. Insofern ist die Zwischenschicht elektrisch isolierend.

Der Einsatz einer derartigen Zwischenschicht hat den Vorteil, dass damit zumindest weitgehend eine Messwertverfälschung der Messwerte des Sensorelementes durch Wärmeabfluss aus dem sensitiven Bereich in Richtung auf das Substrat verhindert werden kann. Dies ergibt sich dadurch, dass die Zwischenschicht gegenüber dem Substrat aus Al₂O₃ eine wesentlich geringere Wärmeleitfähigkeit aufweist.

### Zeichnungen

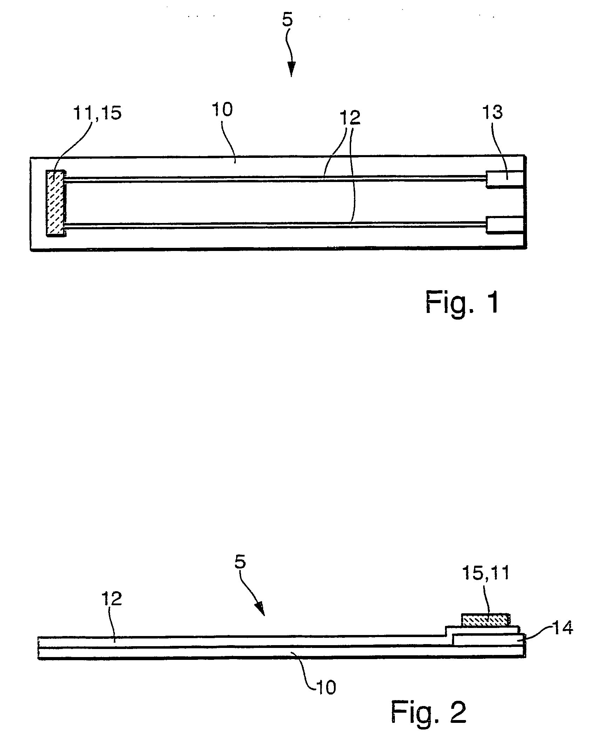

Die Erfindung wird anhand der Zeichnung und in der nachfolgenden Beschreibung näher erläutert. Es zeigt Figur 1 ein erstes Ausführungsbeispiel eines Temperaturfühlers in Draufsicht und Figur 2 ein zweites Ausführungsbeispiel eines Temperaturfühlers im Schnitt.

### Ausführungsbeispiele

Zunächst wird ein Glaspulver vorbereitet, das aus einem Ausgangspulver erschmolzen worden ist, das Siliziumdioxid, Aluminiumoxid, Titandioxid, Natriumoxid, Kaliumoxid und Calziumoxid enthält. Im Einzelnen enthält das Ausgangspulver 38 Gew.% bis 48 Gew.% SiO₂, 15 Gew.% bis 19 Gew.% Al₂O₃, 4,5 Gew.% bis 10 Gew.% TiO₂, 0,1 Gew.% bis 1,5 Gew.% Na₂O, 0,1 Gew.% bis 1,5 Gew.% K₂O und 23 Gew.% bis 30 Gew.% CaO.

Bevorzugt besteht das Ausgangspulver aus 45 Gew.% SiO₂, 17 Gew.% Al₂O₃, 9 Gew.% TiO₂, 0,5 Gew.% Na₂O, 0,5 Gew.% K₂O und 28 Gew.% CaO.

Nachdem aus diesem Ausgangspulver in an sich bekannter Weise zunächst ein Glas erschmolzen worden ist, wird dieses Glas zu einem Glaspulver zermahlen, das eine mittlere Teilchengröße von 1 µm bis 20 µm, insbesondere 2 µm bis 10 µm, aufweist. Im erläuterten Ausführungsbeispiel beträgt die mittlere Teilchengröße 5 µm.

Nachfolgend wird das derart hergestellte Glaspulver dann mit einer Oberflächenmetallisierung aus Platin versehen. Dazu wird das Glaspulver zunächst in der aus DE 196 36 493 C1 bekannten Weise mit einem Edelmetallsalz bekeimt, das chemisch an die Oberfläche der Glaspulverteilchen gebunden ist. Anschließend wird das derartig bekeimte Glaspulver mit einer Platin-Metallschicht in Form einer Oberflächenmetallisierung durch stromloses Metallisieren überzogen. Dieses stromlose Metallisieren erfolgt ebenfalls in der aus DE 196 36 493 C1 bekannten Weise, indem das bekeimte Glaspulver in einem Bad stromlos metallisiert wird, welches ein Platinsalz und ein Reduktionsmittel enthält. Am Ende der vorgenommenen Oberflächenmetallisierung des eingesetzten Glaspulvers steht somit ein Glaspulver, bei dem die Oberfläche der einzelnen Glaspulverteilchen zumindest weitgehend mit einer Platin-Metallisierung versehen ist.

Die Dicke der derart aufgebrachten Oberflächenmetallisierung, die im Wesentlichen den spezifischen elektrischen Widerstand der im Weiteren erhaltenen glaskeramischen Einschmelzung bestimmt, beträgt im Mittel 0,5 nm bis 10 nm, insbesondere 1 nm bis 3 nm. Im erläuterten Beispiel wird zur Einstellung eines Widerstandes von 500 Ω eine mittlere Dikke der Oberflächenmetallisierung von ca. 2 nm eingestellt.

Nachdem nun das eingesetzte Glaspulver mit der Oberflächenmetallisierung aus Platin in der erläuterten Weise versehen worden ist, wird dieses dann zu einer erste Dickschichtpaste verarbeitet. Dazu wird dem metallisierten Glaspulver ein Binder wie beispielsweise Cellulose und ein Lösungsmittel wie beispielsweise Terpineol zugesetzt.

Neben der derart vorbereiteten ersten Dickschichtpaste wird nun zur Herstellung von Leiterbahnen zur elektrischen Kontaktierung der im Weiteren herzustellenden glaskeramischen Einschmelzung in dem sensitiven Bereich des zu erzeugenden Temperaturfühlers eine zweite Dickschichtpaste hergestellt. Diese zweite Dickschichtpaste enthält eine Mischung des Ausgangspulvers für die vorstehend bereits erläuterte erste Dickschichtpaste mit einem Metallpulver, insbesondere einem Palladiumpulver. Darüber hinaus ist dieser zweiten Dickschichtpaste auch der vorstehend genannte Binder und das vorstehend genannte Lösungsmittel zugesetzt. Insgesamt unterscheidet sich somit die zweite Dickschichtpaste zur Herstellung der Leiterbahnen von der ersten Dickschichtpaste zur Herstellung der glaskeramischen Einschmelzung in dem sensitiven Bereich des Temperaturfühlers lediglich dadurch, dass im Fall der zweiten Dickschichtpaste auf eine Oberflächenmetallisierung des eingesetzten Glaspulvers verzichtet worden ist und statt dessen der zweiten Dickschichtpaste direkt ein Palladiumpulver zugesetzt wurde.

Die Figur 1 zeigt ein bekanntes Fertigsubstrat aus Al₂O₃ in Form eines Plättchens auf dessen Oberfläche zunächst einseitig in bekannter Weise Leiterbahnen 12 und Anschlusskontaktflächen 13 aufgedruckt wurden. Dazu wurde die vorstehend beschriebene zweite Dickschichtpaste eingesetzt. Die Breite der Leiterbahnen 12 beträgt typischerweise 10 µm bis 100 µm, ihre Dicke liegt zwischen 1 µm und 10 µm. Anschließend wurde dann in einem sensitiven Bereich 11 auf dem Substrat 10 die erste Dickschichtpaste mit dem mit einer Oberflächenmetallisierung versehenen Glaspulver aufgedruckt. Der sensitive Bereich 11 des im erläuterten Beispiel als Temperaturfühler 5 ausgebildeten Sensorelementes ist dabei derjenige Bereich, dessen elektrischer Widerstand sich unter dem Einfluss einer äußeren, zu messenden Temperatur ändert. Insbesondere ist dieser sensitive Bereich 11 beim Einsatz des erläuterten Temperaturfühlers 5 in der Katalysator-Überwachung oder Motorregelung einem heißen Abgas ausgesetzt. Die Größe des sensitiven Bereiches 11 liegt im erläuterten Beispiel bei einer Länge von ca. 5 mm, einer Breite von ca. 0,1 mm und einer Höhe von ca. 30 µm. Die Ausdehnung des sensitiven Bereiches 11 wird somit durch die Größe des mit der ersten Dickschichtpaste bedruckten Bereiches auf dem Substrat 10 definiert.

Nachdem nun einerseits die Zuleitungen 12 und im sensitiven Bereich 11 quer über den Zuleitungen 12 die erste Dickschichtpaste aufgedruckt wurde, die im Weiteren eine glaskeramische Einschmelzung 15 bilden soll, wird das derart bedruckte Substrat 10 nun einer Wärmebehandlung bei Temperaturen von 850°C bis 950°C unterzogen. Dabei bilden sich aus den aufgedruckten Dickschichtpasten glaskeramische Einschmelzungen, d. h. es kommt zu einer Einschmelzung des Glaspulvers in dem Ausgangsmaterial, wobei gleichzeitig refraktäre Phasen auskristallisieren, die bis über 1000°C temperaturstabil und in ihrem Wärmeausdehnungskoeffizienten an das Substrat 10 aus Al₂O₃ angepasst sind.

Bei dieser Temperaturbehandlung bildet sich somit einerseits in dem sensitiven Bereich 11 eine glaskeramische Einschmelzung 15, die eine insbesondere netzwerkartig ausgebildete, in eine glaskeramische Matrix eingebettete Metallphase aus Platin aufweist. Darüber hinaus bildet sich bei der Wärmebehandlung im Bereich der Zuleitungen 12 gleichzeitig aus der dort aufgedruckten zweiten Dickschichtpaste ebenfalls eine glaskeramische Einschmelzung mit einer in eine glaskeramische Matrix eingebetteten Metallphase aus Palladium. Insgesamt entsteht somit ein Sensorelement in Form eines Temperaturfühlers 5, der zumindest weitgehend eine Charakteristik des spezifischen elektrischen Widerstandes wie übliche Platin-Widerstände (Pt100- oder Pt200-Element) aufweist.

In diesem Zusammenhang sei weiter betont, dass die Zuleitungen 12 alternativ zu der hier erläuterten Ausführungsform an Stelle einer glaskeramischen Einschmelzung auch mittels Aufdrucken einer handelsüblichen niederohmigen Elektrodenpaste hergestellt werden können. Insofern ist es für das erläuterte Ausführungsbeispiel lediglich wichtig, dass die glaskeramische Einschmelzung 15 in dem sensitiven Bereich 11 in der vorstehend erläuterten Weise ausgeführt wird. Hinsichtlich der konkreten Realisierung der Zuleitungen 12 bzw. auch der Anschlusskontaktflächen 13 können jedoch auch aus dem Stand der Technik bereits bekannte Verfahren eingesetzt werden, die nicht zwingend die Erzeugung eines Glaskeramik-Metall-Mischgefüges, wie vorstehend erläutert, erfordern.

Die Figur 2 zeigt ein weiteres Ausführungsbeispiel eines Sensorelementes in Form eines Temperaturfühlers 5, der sich von dem Ausführungsbeispiel gemäß Figur 1 lediglich dadurch unterscheidet, dass zumindest in dem sensitiven Bereich 11 zwischen der erzeugten glaskeramischen Einschmelzung 15 und dem Substrat 10 eine zusätzliche Zwischenschicht 14 vorgesehen ist. Diese Zwischenschicht 14 hat beispielsweise eine Dicke von 20 µm bis 100 µm und dient der thermischen Entkopplung der glaskeramischen Einschmelzung 15 von dem Substrat 10. Insofern ist es erforderlich, dass die Zwischenschicht 14 eine gegenüber dem Substrat 10, im erläuterten Beispiel Al₂O₃, wesentlich geringere Wärmeleitfähigkeit aufweist.

Zur Herstellung der Zwischenschicht 14 wird erneut das zur Herstellung der glaskeramischen Einschmelzung 15 bereits eingesetzte Ausgangsmaterial mit dem dort erläuterten Glaspulver eingesetzt. Dabei wird jedoch eine Oberflächenmetallisierung dieses Glaspulvers verzichtet, d. h. das Glaspulver wird mit dem Binder und dem Lösungsmittel zu einer dritten Dickschichtpaste verarbeitet, die keine Komponente enthält, die mit einer Oberflächenmetallisierung versehen ist, und die auch keinen Zusatz eines Metallpulvers aufweist.

Bei dem Ausführungsbeispiel gemäß Figur 2 wird somit zunächst auf dem Substrat 10 die Zwischenschicht 14 in dem sensitiven Bereich 11 aufgedruckt. Danach wird dann völlig analog dem Ausführungsbeispiel gemäß Figur 1 auf dem Substrat 10 die Leiterbahnen 12 aufgedruckt bzw. die Anschlusskontaktflächen 13 erzeugt. Dieses Aufdrucken der Leiterbahnen 12 erfolgt dabei derart, dass diese bis in den sensitiven Bereich 11 hinein reichen und somit teilweise auch auf der Zwischenschicht 14 aufgedruckt werden. Anschließend wird dann in dem sensitiven Bereich 11 quer über den Zuleitungen 12 die erste Dickschichtpaste analog dem ersten Ausführungsbeispiel aufgedruckt. Schließlich wird das derart vorbereitete Substrat 10 dann erneut einer Temperaturbehandlung bei 850 °C bis 950 °C unterzogen, wobei sich in dem sensitiven Bereich 11 einerseits die glaskeramische Einschmelzung 15 ausbildet, die eine Charakteristik des spezifischen elektrischen Widerstandes wie ein Platin-Widerstandselement aufweist. Gleichzeitig bilden sich die Zuleitungen 12 in Form eines Glaskeramik-Metall-Mischgefüges aus einer glaskeramischen Einschmelzung mit einer Palladium-Phase. Schließlich bildet sich bei dieser Wärmebehandlung aus der dritten Dickschichtpaste ein elektrisch isolierende glaskeramische Einschmelzung als Zwischenschicht 14.

## Patentansprüche

1. Sensorelement, insbesondere Temperaturfühler (5), mit einem sensitiven Bereich (11), dessen elektrischer Widerstand sich unter dem Einfluß einer Temperatur, der der sensitive Bereich (11) ausgesetzt ist, verändert, **dadurch gekennzeichnet, dass** der sensitive Bereich (11) eine glaskeramische Einschmelzung (15) eines Ausgangsmaterials aufweist, das mindestens eine Komponente enthält, die zumindest weitgehend mit einer Oberflächenmetallisierung versehen ist.

2. Sensorelement nach Anspruch 1, **dadurch gekennzeichnet, dass** die Oberflächenmetallisierung eine Platin-Metallisierung ist.

3. Sensorelement nach Anspruch 1 oder 2, **dadurch gekennzeichnet, dass** die Oberflächenmetallisierung eine mittlere Dicke von 0,5 nm bis 10 nm, insbesondere 1 nm bis 3 nm, aufweist.

4. Sensorelement nach Anspruch 1, **dadurch gekennzeichnet, dass** die mit der Oberflächenmetallisierung versehene Komponente des Ausgangsmaterials ein Glaspulver ist, das aus einem Ausgangspulver erschmolzen ist, das SiO₂, Al₂O₃, TiO₂, Na₂O, K₂O und CaO enthält.

5. Sensorelement nach Anspruch 4, **dadurch gekennzeichnet, dass** das Ausgangspulver 38 Gew.% bis 48 Gew.% SiO₂, 15 Gew.% bis 19 Gew.% Al₂O₃, 4,5 Gew.% bis 10 Gew.% TiO₂, 0,1 Gew.% bis 1,5 Gew.% Na₂O, 0,1 Gew.% bis 1,5 Gew.% K₂O und 23 Gew.% bis 30 Gew.% CaO enthält.

6. Sensorelement nach Anspruch 4, **dadurch gekennzeichnet, dass** das Glaspulver eine mittlere Teilchengröße von 1 µm bis 20 µm, insbesondere 2 µm bis 10 µm, aufweist.

7. Sensorelement nach mindestens einem der vorangehenden Ansprüche, **dadurch gekennzeichnet, dass** die glaskeramische Einschmelzung (15) eine insbesondere netzwerkartig ausgebildete, in eine glaskeramische Matrix eingebettete Metallphase aufweist.

8. Sensorelement nach mindestens einem der vorangehenden Ansprüche, **dadurch gekennzeichnet, dass** das Ausgangsmaterial eine erste Dickschichtpaste ist.

9. Sensorelement nach mindestens einem der vorangehenden Ansprüche, **dadurch gekennzeichnet, dass** die glaskeramische Einschmelzung (15) kristalline, insbesondere refraktäre Phasen aufweist und bis über 1000°C temperaturstabil ist.

10. Sensorelement nach mindestens einem der vorangehenden Ansprüche, **dadurch gekennzeichnet, dass** die glaskeramische Einschmelzung (15) auf einem Substrat (10) angeordnet und über insbesondere auf dem Substrat (10) befindliche Leiterbahnen (12) und Kontaktflächen (13) elektrisch kontaktierbar ist.

11. Sensorelement nach mindestens einem der vorangehenden Ansprüche, **dadurch gekennzeichnet, dass** das Sensorelement ein Temperaturfühler (5) ist, der zumindest weitgehend eine Charakteristik des spezifischen elektrischen Widerstandes wie ein Platin-Widerstands-Element aufweist.

12. Sensorelement nach mindestens einem der vorangehenden Ansprüche, **dadurch gekennzeichnet, dass** das Ausgangsmaterial auf das Substrat (10) aufgebracht, insbesondere aufgedruckt, und dann bei 850°C bis 950°C eingeschmolzen worden ist.

13. Sensorelement nach mindestens einem der vorangehenden Ansprüche, **dadurch gekennzeichnet, dass** die Leiterbahnen (12) von einem Glaskeramik-Metall-Verbundgefüge aus einer Einschmelzung einer zweiten Dickschichtpaste mit einer Mischung des Ausgangspulvers mit einem Metallpulver, insbesondere einem Palladiumpulver, gebildet sind.

14. Sensorelement nach mindestens einem der vorangehenden Ansprüche, **dadurch gekennzeichnet, dass** der Wärmeausdehnungskoeffizient der Leiterbahnen (12) und/oder der glaskeramischen Einschmelzung (15) an den Wärmeausdehnungskoeffizienten des Substrates (10), insbesondere Al₂O₃, angepasst ist,

15. Sensorelement nach mindestens einem der vorangehenden Ansprüche, **dadurch gekennzeichnet, dass** die glaskeramische Einschmelzung (15) in dem sensitiven Bereich (11) zumindest bereichsweise über mindestens eine Zwischenschicht (14) von dem Substrat (10) thermisch entkoppelt ist.

16. Sensorelement nach Anspruch 15, **dadurch gekennzeichnet, dass** die Zwischenschicht (14) eine glaskeramische Einschmelzung einer dritten Dickschichtpaste mit dem Ausgangsmaterial ist, wobei die Oberflächenmetallisierung des Glaspulvers unterblieben ist.

## Claims

1. Sensor element, in particular a temperature sensor (5), with a sensitive area (11), the electrical resistance of which changes under the influence of a temperature to which the sensitive area (11) is subjected, **characterized in that** the sensitive area (11) comprises a glass-ceramic melt (15) of a starting material which contains at least one component that is at least largely provided with a surface metallization.

2. Sensor element according to Claim 1, **characterized in that** the surface metallization is a platinum metallization.

3. Sensor element according to Claim 1 or 2, **characterized in that** the surface metallization has an average thickness of 0.5 nm to 10 nm, in particular 1 nm to 3 nm.

4. Sensor element according to Claim 1, **characterized in that** the component of the starting material that is provided with the surface metallization is a glass powder which is melted from a starting powder that contains SiO₂, Al₂O₃, TiO₂, Na₂O, K₂O and CaO.

5. Sensor element according to Claim 4, **characterized in that** the starting powder contains 38% by weight to 48% by weight SiO₂, 15% by weight to 19% by weight Al₂O₃, 4.5% by weight to 10% by weight TiO₂, 0.1% by weight to 1.5% by weight Na₂O, 0.1% by weight to 1.5% by weight K₂O and 23% by weight to 30% by weight CaO.

6. Sensor element according to Claim 4, **characterized in that** the glass powder has an average particle size of 1 µm to 20 µm, in particular 2 µm to 10 µm.

7. Sensor element according to at least one of the preceding claims, **characterized in that** the glass-ceramic melt (15) has a metal phase that is formed in particular in the manner of a network and is embedded in a glass-ceramic matrix.

8. Sensor element according to at least one of the preceding claims, **characterized in that** the starting material is a first thick-film paste.

9. Sensor element according to at least one of the preceding claims, **characterized in that** the glass-ceramic melt (15) has crystalline, in particular refractory phases and is thermally stable up to 1000°C.

10. Sensor element according to at least one of the preceding claims, **characterized in that** the glass-ceramic melt (15) is arranged on a substrate (10) and can be electrically contacted by means of conductor tracks (12) and contact pads (13) that are located in particular on the substrate (10).

11. Sensor element according to at least one of the preceding claims, **characterized in that** the sensor element is a temperature sensor (5), which at least largely has a resistivity characteristic similar to that of a platinum resistance element.

12. Sensor element according to at least one of the preceding claims, **characterized in that** the starting material has been applied to the substrate (10), in particular printed on, and then melted at 850°C to 950°C.

13. Sensor element according to at least one of the preceding claims, **characterized in that** the conductor tracks (12) are formed by a glass-ceramic/metal composite structure comprising a melt of a second thick-film paste with a mixture of the starting powder with a metal powder, in particular a palladium powder.

14. Sensor element according to at least one of the preceding claims, **characterized in that** the coefficient of thermal expansion of the conductor tracks (12) and/or of the glass-ceramic melt (15) is adapted to the coefficient of thermal expansion of the substrate (10), in particular Al₂O₃.

15. Sensor element according to at least one of the preceding claims, **characterized in that** the glass-ceramic melt (15) is thermally isolated from the substrate (10) in the sensitive area (11), at least over certain areas, by means of at least one intermediate layer (14).

16. Sensor element according to Claim 15, **characterized in that** the intermediate layer (14) is a glass-ceramic melt of a third thick-film paste with the starting material, the surface metallization of the glass powder being omitted.

## Revendications

1. Elément de capteur notamment capteur de température (5) comportant une zone sensible (11) dont la résistance électrique varie sous l'influence de la température à laquelle est exposée la zone sensible (11),
**caractérisé en ce que**
la zone sensible (11) comporte une céramique vitreuse fondue (15) d'une matière première contenant au moins un composant muni au moins en grande partie d'une métallisation de surface.

2. Elément de capteur selon la revendication 1,
**caractérisé en ce que**
la métallisation de surface est une métallisation de platine.

3. Elément de capteur selon la revendication 1 ou 2,
**caractérisé en ce que**
la métallisation de surface présente une épaisseur moyenne de 0,5 nm à 10 nm notamment de 1 nm à 3 nm.

4. Elément de capteur selon la revendication 1,
**caractérisé en ce que**
le composant de la matière première muni de la métallisation de surface est une poudre de verre fondu à partir d'une poudre de départ contenant SiO₂, Al₂O₃, TiO₂, Na₂O, K₂O, CaO

5. Elément de capteur selon la revendication 4,
**caractérisé en ce que**
la poudre de départ contient entre 38 % en poids et 48 % en poids de SiO₂, entre 15 % en poids et 19 % en poids de Al₂O₃, entre 4,5 % en poids et 10 % en poids de TiO₂, entre 0,1 % en poids et 1,5 % en poids de Na₂O, entre 0,1 % en poids et 1,5 % en poids de K₂O et entre 23 % en poids et 30 % en poids de CaO.

6. Elément de capteur selon la revendication 4,
**caractérisé en ce que**
la dimension moyenne de particule de la poudre de verre est comprise entre 1 µm et 20 µm et notamment entre 2 µm et 10 µm.

7. Elément de capteur selon au moins l'une des revendications précédentes,
**caractérisé en ce que**
la céramique vitreuse fondue (15) comporte une phase métallique notamment en forme de réseau dans une matrice de céramique vitreuse.

8. Elément de capteur selon au moins l'une des revendications précédentes,
**caractérisé en ce que**
la matière première est une première pâte en couche épaisse.

9. Elément de capteur selon au moins l'une des revendications précédentes,
**caractérisé en ce que**
la céramique vitreuse fondue (15) comporte une phase cristalline, notamment réfractaire et stable en température jusqu'au-delà de 1000°C.

10. Elément de capteur selon au moins l'une des revendications précédentes,
**caractérisé en ce que**
la céramique vitreuse fondue (15) est installée sur un substrat (10) et elle est mise en contact électrique notamment par des chemins conducteurs (12) et des surfaces de contact (13) sur le substrat (10).

11. Elément de capteur selon au moins l'une des revendications précédentes,
**caractérisé en ce que**
l'élément de capteur est un capteur de température (5) qui présente au moins très largement une caractéristique de résistance électrique spécifique tel qu'un élément de résistance en platine.

12. Elément de capteur selon au moins l'une des revendications précédentes,
**caractérisé en ce que**
la matière première est appliquée sur le substrat (10) notamment par impression pour être ensuite fondue à une température comprise entre 850°C et 950°C.

13. Elément de capteur selon au moins l'une des revendications précédentes,
**caractérisé en ce que**
les chemins conducteurs (12) sont réalisés par un réseau de liaisons métal-céramique vitreuse par la fusion d'une seconde pâte de couche épaisse avec mélange de la poudre de départ à une poudre métallique, notamment une poudre de palladium.

14. Elément de capteur selon au moins l'une des revendications précédentes,
**caractérisé en ce que**
le coefficient de dilatation thermique des chemins conducteurs (12) et/ou de la céramique vitreuse fondue (15) est adapté au coefficient de dilatation thermique du substrat (10) notamment d'un substrat en Al₂O₃.

15. Elément de capteur selon au moins l'une des revendications précédentes,
**caractérisé en ce que**
la fusion de céramique vitreuse fondue (15) dans la couche sensible (11) est découplée thermiquement au moins par zone, par au moins une couche intermédiaire (14) par rapport au substrat (10).

16. Elément de capteur selon au moins l'une des revendications précédentes,
**caractérisé en ce que**
la couche intermédiaire (14) est une céramique vitreuse fondue d'une troisième pâte en couche épaisse avec la matière première, sans métallisation de surface de la poudre de verre.
